# EUROPÄISCHE PATENTSCHRIFT

(11) **EP 0 883 640 B1**
(45) Veröffentlichungstag und Bekanntmachung des Hinweises auf die Patenterteilung: **18.08.1999**
(21) Anmeldenummer: 97915355.8
(22) Anmeldetag: 26.02.1997
(51) Int. Cl.: C08G 63/20, C08G 63/199, C08G 18/42, C09D 175/06

(54) **NEUE POLYESTERPOLYOLE UND IHRE VERWENDUNG ALS POLYOLKOMPONENTE IN ZWEIKOMPONENTEN-POLYURETHANLACKEN**
NOVEL POLYESTER POLYOLS AND THEIR USE AS THE POLYOL COMPONENT IN TWO-COMPONENT POLYURETHANE PAINTS
NOUVEAUX POLYOLS POLYESTER ET LEUR UTILISATION COMME CONSTITUANTS POLYOLS DANS DES PEINTURES POLYURETHANE A DEUX COMPOSANTS

(30) Priorität: 29.02.1996 DE 19607585
(43) Veröffentlichungstag der Anmeldung: 16.12.1998
(73) Patentinhaber: SYNTHOPOL CHEMIE Dr. rer. pol. Koch GmbH & CO. KG, 21614 Buxtehude (DE)
(72) Erfinder: DOS SANTOS, Antoniò, Manuel, D-21614 Buxtehude (DE)
(74) Vertreter: Nielsch, Walter
(86) Internationale Anmeldenummer: EP9700930
(87) Internationale Veröffentlichungsnummer: WO9731964

(56) Entgegenhaltungen:
- EP-A- 0 036 975
- EP-A- 0 556 793
- EP-A- 0 705 858
- US-A- 4 816 325

## Beschreibung

Die vorliegende Erfindung betrifft neue Polyesterpolyole auf Basis ausgewählter Ausgangsmaterialien und ihre Verwendung in Kombination mit Lackpolyisocyanaten als Bindemittel bzw. als Bindemittelkomponente in Zweikomponenten-Polyurethanlacken bei der Beschichtung von Metallen, Hölzern, Papieren, Pappen sowie Kunststoffformteilen. Aufgabe der Erfindung ist es, solche neue Polyesterpolyole zur Verfügung zu stellen, die folgende Anforderungen erfüllen:
1. Die neuen Polyesterpolyole sollen es gestatten, mit Polyisocyanaten vernetzbare Reaktionslacke herzustellen, die einen deutlich herabgesetzten Lösungsmittelbedarf haben, wie dies die in Vorbereitung befindliche Umweltschutz-Gesetzgebung fordern wird, insbesondere im Automobil-Reparaturbereich. Entwürfe hierzu existieren bereits. (Europäische Vereinigung der Verbände der Lack-, Druckfarben- und Künstlerfarbenfabrikanten [CEPE] Technology guideline for vehicle refinishes [12.02.92])
2. Die neuen Polyesterpolyole sollen als Bindemittelkomponente für mit Polyisocyanaten vernetzbare Klarlacke oder pigmentierte Reaktionslacke zur Herstellung von Überzügen auf Metallen, Hölzern, Papieren, Pappen sowie Kunststofformteilen geeignet sein.
3. Die aus Reaktionslacken, die die neuen Polyesterpolyole enthalten, erhältlichen Überzüge müssen physikalisch bei Raumtemperatur z.B. für die Holzlackierung, bei ca. 60°C für die Autoreparatur-Lackierung und bei ca. 80°C für die Kunststoff-Lackierung in kurzer Zeit trocknen.
4. Damit die Reaktionslacke, die die neuen Polyesterpolyole enthalten, sehr vielseitig einsetzbar sind, sind Chemikalienbeständigkeit und hohe mechanische Widerstandsfähigkeit für die erhaltenen ausgehärteten Überzugsfilme unbedingt erforderlich.
5. Gegenüber den bisherigen Polyesterpolyolen für den gleichen Einsatzbereich, die meistens aromatische Komponenten eingebaut enthalten, sollen die neuen Polyesterpolyole Reaktionslacke herzustellen gestatten, deren Überzugsfilme sich durch eine hervorragende Wetterbeständigkeit, insbesondere Glanzhaltung und Vergilbungsbeständigkeit auszeichnen.
6. Die neuen Polyesterpolyole sollen in gelöster Form möglichst farblos sein, damit sich daraus Reaktionslacke herstellen lassen, die als Klarlacke und Weißlacke keine Eigenfarbe aufzeigen.

Es ist seit langem bekannt, verschiedene Substrate mit Zweikomponenten-Polyurethanlacken auf Basis von Hydroxylgruppen aufweisenden Polyestern, Polyethern oder Polyacrylaten und organischen Polyisocyanaten zu beschichten. Die resultierenden Lacküberzüge zeichnen sich insbesondere durch eine ausgezeichnete Härte, eine sehr gute Haftung und gute Wetterbeständigkeit aus. Die chemischen Grundlagen dieser Lacke und Überzüge werden u.a. in "Lackkunstharze" Hans Wagner/Hans FriedrichSarx, Carl Hanser Verlag, München, Seite 153 bis 173, 1971, beschrieben.

Das auf den neuen Polyesterpolyolen basierende neue Lacksystem sollte insbesondere folgenden Anforderungen genügen:
1. Gute Glanzhaltung und Vergilbungsbeständigkeit:
   Der Lackfilm bei der Autoreparaturlackierung z.B. sollte nicht schneller abbauen als derjenige von der Erstlackierung.
2. Keine Nachversprödung:
   Auch nach längerer Bewitterung darf der Film nicht nachverspröden.
3. Niedrige Trockentemperatur:
   Die erforderlichen Trockentemperaturen- und zeiten sollten aus verschiedenen Gründen u.a. der Energieersparnis möglichst niedrig sein.
4. Reparaturfähigkeit:
   Die Trocknungsbedingungen eines solchen Systems sollten neben der Erstlackierung auch eine Reparaturlackierung mit Trocknung bei 60°C, 80°C oder Raumtemperatur ermöglichen.

Wie jetzt überraschenderweise herausgefunden wurde, gelingt es durch die Verwendung der nachstehend näher beschriebenen erfindungsgemäßen Polyesterpolyole auf Basis ausgewählter Ausgangsmaterialien als Polyhydroxylkomponente in Zweikomponenten-Polyurethanlacken die gestellten Aufgaben zu lösen.

Gegenstand der Erfindung sind die Polyesterpolyole nach den Ansprüchen 1 bis 12 sowie deren Verwendung nach den Ansprüchen 13 bis 15.

Gegenstand der Erfindung sind Polyesterpolyole mit Hydroxylzahlen von 75 bis 300, Säurezahlen von 5 bis 30 und stöchiometrisch errechnete Molmassen von 600 bis 15000, aufgebaut aus Umsetzungsprodukten von
a) 5 bis 50 Mol-% Neopentylglykol,
b) 5 bis 45 Mol-% Trimethylolpropan,
c) 20 bis 51,5 Mol-% Hexahydrophtalsäure und/oder deren Anhydrid,
d) 0,5 bis 32 Mol-% Phthalsäure und/oder deren Anhydrid,
e) 0 bis 18 Mol.-% andere Alkandiole aus der Gruppe 1,2-, 1,3-, 1,4-Butandiol, 1,5-Pentandiol, 1,6-Hexandiol, Cyclohexan-1,4-dimethanol, Hydroxypivalinsäureneopentyl-ester, Cyclohexandiol, Trimethylpentandiol, Ethylbutylpropandiol, Ethylenglykol, Diethylenglykol, Triethylenglykol, 1,2-Propandiol, Dipropylenglykol, einzeln oder im Gemisch.
f) 0 bis 18 Mol.-% andere Dicarbonsäuren und/oder Hydroxydicarbonsäuren und/oder deren Anhydrid aus der Gruppe 5-Hydroxyisophthalsäure, Isophthalsäure, Terephthalsäure, Halogensäuren, wie Tetrachlor- bzw. Tetrabromphthalsäure, Tetrahydrophthalsäure, 1,2-Cyclohexandicarbonsäure, 1,4-Cyclohexandicarbonsäure, 4-Methylhexahydrophthalsäure, Endomethylentetrahydrophthalsäure, Tricyclodecan-dicarbonsäure, Endoethylenhexahydrophthalsäure, Camphersäure (1,2,2,-Trimethylcyclopentan-1,3-dicarbonsäure, Adipinsäure, Bernsteinsäure, Azelainsäure, Sebacinsäure, Glutarsäure, einzeln oder im Gemisch.
g) 0 bis 16 Mol.-% Monocarbonsäuren und/oder Hydroxycarbonsäuren aus der Gruppe Benzoesäure, p. tert. Butylbenzoesäure, Laurinsäure, Isononansäure, 2,2-Dimethylpropionsäure, 2-Ethylhexansäure, Capronsäure, Caprylsäure, Caprinsäure, Versaticsäure, Hexahydrobenzoesäure, Hydroxypivalinsäure, 3-,4-,Hydroxybenzoesäure, 2-,3-Hydroxy-4-, 4-methylbenzoesäure, 2-,3-,4-Hydroxybenzoesäure, 2-Hydroxy-2-phenylpropionsäure, einzeln oder im Gemisch.
h) 0 bis 14 Mol.-% aliphatischen und/oder cycloaliphatischen Monoalkoholen, wobei die Monoalkohole 4 bis 18 C-Atome besitzen,
wobei die sich unter a), b), c) und d), gegebenenfalls e), f), g) und h) angegebenen Mol-%-Angaben jeweils zu 100 Mol-% ergänzen.

Eine Ausführungsform der Erfindung betrifft Polyesterpolyole mit Hydroxylzahlen von 100 bis 280, Säurezahlen von 6 bis 28 und stöchiometrisch errechnete Molmassen von 750 bis 12000, aufgebaut aus Umsetzungsprodukten von
a) 8 bis 47 Mol-% Neopentylglykol,
b) 8 bis 42 Mol-% Trimethylolpropan,
c) 25 bis 51 Mol-% Hexahydrophtalsäure und/oder deren Anhydrid,
d) 1 bis 27 Mol-% Phthalsäure und/oder deren Anhydrid,
wobei die sich unter a), b), c) und d) angegebenen Mol-%-Angaben jeweils zu 100 Mol% ergänzen.

Eine andere Ausführungsform der Erfindung beinhaltet Polyesterpolyole mit Hydroxylzahlen von 110 bis 270, Säurezahlen von 7 bis 26 und stöchiometrisch errechnete Molmassen von 750 bis 10000, aufgebaut aus Umsetzungsprodukten von
a) 10 bis 45 Mol-% Neopentylglykol,
b) 10 bis 40 Mol-% Trimethylolpropan,
c) 30 bis 50 Mol-% Hexahydrophtalsäure und/oder deren Anhydrid,
d) 1 bis 22 Mol-% Phthalsäure und/oder deren Anhydrid,
wobei die sich unter a), b), c) und d) angegebenen Mol-%-Angaben jeweils zu 100 Mol% ergänzen.

Eine weitere Ausführungsform der Erfindung umfaßt Polyesterpolyole mit Hydroxylzahlen von 120 bis 260, Säurezahlen von 8 bis 25 und stöchiometrisch errechnete Molmassen von 780 bis 8000, aufgebaut aus Umsetzungsprodukten von
a) 12 bis 43 Mol-% Neopentylglykol,
b) 12 bis 38 Mol-% Trimethylolpropan,
c) 32 bis 50 Mol-% Hexahydrophtalsäure und/oder deren Anhydrid,
d) 1 bis 17 Mol-% Phthalsäure und/oder deren Anhydrid,
wobei die sich unter a), b), c) und d) angegebenen Mol-%-Angaben jeweils zu 100 Mol% ergänzen.

Zu einer anderen Ausführungsform der Erfindung gehören Polyesterpolyole mit Hydroxylzahlen von 125 bis 255, Säurezahlen von 9 bis 24 und stöchiometrisch errechnete Molmassen von 800 bis 7000, aufgebaut aus Umsetzungsprodukten von
a) 14 bis 41 Mol-% Neopentylglykol,
b) 14 bis 36 Mol-% Trimethylolpropan,
c) 35 bis 49 Mol-% Hexahydrophtalsäure und/oder deren Anhydrid,
d) 2 bis 12 Mol-% Phthalsäure und/oder deren Anhydrid,
wobei die sich unter a), b), c) und d) angegebenen Mol-%-Angaben jeweils zu 100 Mol% ergänzen.

Eine weitere Ausführungsform der Erfindung stellen Polyesterpolyole mit Hydroxylzahlen von 130 bis 250, Säurezahlen von 10 bis 24 und stöchiometrisch errechnete Molmassen von 800 bis 6000, aufgebaut aus Umsetzungsprodukten von
a) 15 bis 40 Mol-% Neopentylglykol,
b) 15 bis 35 Mol-% Trimethylolpropan,
c) 36 bis 48 Mol-% Hexahydrophtalsäure und/oder deren Anhydrid,
d) 2 bis 7 Mol-% Phthalsäure und/oder deren Anhydrid,
wobei die sich unter a), b), c) und d) angegebenen Mol-%-Angaben jeweils zu 100 Mol% ergänzen, dar.

Eine weitere Ausführungsform der Erfindung umfaßt Polyesterpolyole mit Hydroxylzahlen von 130 bis 250, Säurezahlen von 10 bis 24 und stöchiometrisch errechnete Molmassen von 600 bis 6000, aufgebaut aus Umsetzungsprodukten von.
a) 25 bis 40 Mol-% Neopentylglykol,
b) 18 bis 28 Mol-% Trimethylolpropan,
c) 35 bis 45 Mol-% Hexahydrophtalsäure und/oder deren Anhydrid,
d) 2 bis 5 Mol-% Phthalsäure und/oder deren Anhydrid,
wobei die sich unter a), b), c) und d) angegebenen Mol-%-Angaben jeweils zu 100 Mol% ergänzen.

Eine spezielle Ausführungsform der Erfindung beinhaltet Polyesterpolyole mit Hydroxylzahlen von 75 bis 250, Säurezahlen von 10 bis 24 und stöchiometrisch errechnete Molmassen von 600 bis 2600, aufgebaut aus Umsetzungsprodukten von
a) 25 bis 42 Mol-% Neopentylglykol,
b) 5 bis 28 Mol-% Trimethylolpropan,
c) 35 bis 46 Mol-% Hexahydrophtalsäure und/oder deren Anhydrid,
d) 2 bis 15 Mol-% Phthalsäure und/oder deren Anhydrid,
wobei die sich unter a), b), c) und d) angegebenen Mol-%-Angaben jeweils zu 100 Mol% ergänzen.

Eine andere spezielle Ausführungsform der Erfindung umfaßt Polyesterpolyole mit Hydroxylzahlen von 180 bis 250, Säurezahlen von 10 bis 20 und stöchiometrisch errechnete Molmassen von 750 bis 1500, aufgebaut aus Umsetzungsprodukten von
a) 26 bis 30 Mol-% Neopentylglykol,
b) 26 bis 30 Mol-% Trimethylolpropan,
c) 38 bis 41 Mol-% Hexahydrophtalsäure und/oder deren Anhydrid,
d) 3 bis 8 Mol-% Phthalsäure und/oder deren Anhydrid,
wobei die sich unter a), b), c) und d) angegebenen Mol-%-Angaben jeweils zu 100 Mol% ergänzen.

Eine weitere spezielle Ausführungsform der Erfindung betrifft Polyesterpolyole mit Hydroxylzahlen von 80 bis 260, Säurezahlen von 8 bis 25 und stöchiometrisch errechnete Molmassen von 600 bis 2600, aufgebaut aus Umsetzungsprodukten von
a) 34 bis 39 Mol-% Neopentylglykol,
b) 12 bis 22 Mol-% Trimethylolpropan,
c) 35 bis 46 Mol-% Hexahydrophtalsäure und/oder deren Anhydrid,
d) 3 bis 15 Mol-% Phthalsäure und/oder deren Anhydrid,
wobei die sich unter a), b), c) und d) angegebenen Mol-%-Angaben jeweils zu 100 Mol% ergänzen.

Eine weitere spezielle Ausführungsform der Erfindung stellt Polyesterpolyole mit Hydroxylzahlen von 70 bis 110, Säurezahlen von 9 bis 24 und stöchiometrisch errechnete Molmassen von 1200 bis 1800, aufgebaut aus Umsetzungsprodukten von
a) 44 bis 47 Mol-% Neopentylglykol,
b) 4 bis 10 Mol-% Trimethylolpropan,
c) 42 bis 45 Mol-% Hexahydrophtalsäure und/oder deren Anhydrid,
d) 2 bis 4 Mol-% Phthalsäure und/oder deren Anhydrid,
wobei die sich unter a), b), c) und d) angegebenen Mol-%-Angaben jeweils zu 100 Mol% ergänzen, dar.

Die Erfindung betrifft auch die Verwendung der Polyesterpolyole der vorstehend angegebenen Ausführungsformen, gegebenenfalls in Abmischung mit anderen organischen Polyhydroxyverbindungen als Bindemittelkomponenten für Zweikomponenten-Polyurethanlacke, die Lackpolyisocyanate sowie gegebenenfalls die in der Polyurethanlacktechnologie üblichen Hilfs- und Zusatzmittel enthalten, bei der Herstellung von Lacküberzügen auf Metallen, Hölzern, Papieren, Pappen sowie Kunststofformteilen.

Bei der vorstehenden Verwendung kann es sich bei den mit Lacküberzügen zu versehenden Kunststofformteilen um solche handeln, wie sie im Automobilbau Verwendung finden.

Die Verwendung der Polyesterpolyole in Reaktionslacken zur Herstellung von Überzügen oder Grundierungen erfolgt durch Mischen von
(A) Polyesterpolyolen,
(B) gegebenenfalls anderen organischen Polyhydroxylverbindungen,
(C) Polyisocyanaten als Härter,
(D) inerten organischen Lösungsmitteln und gegebenenfalls
(E) weiteren in Reaktionslacken üblichen Zusätzen.

Die Verwendung der Polyesterpolyole erfolgt zur Herstellung von Überzügen oder Grundierungen durch Auftragen eines Lackes auf Basis von hydroxylgruppentragenden Verbindungen, Polyisocyanaten, inerten Lösungsmitteln sowie gegebenenfalls üblichen Zusätzen auf einen Träger und Aushärten bei Raumtemperatur oder erhöhter Temperatur bis 120°C.

Es sei noch bemerkt, daß die cycloaliphatischen Dicarbonsäuren sowohl in ihrer cis- als auch in ihrer trans-Form sowie als Gemisch beider Formen eingesetzt werden können. Geeignet sind auch die veresterungsfähigen Derivate der Dicarbonsäuren, wie z. B. deren ein oder mehrwertige Ester mit aliphatischen Alkohlen mit 1 bis 4 C-Atomen oder Hydroxyalkohlen mit 1 bis 4 C-Atomen. Außerdem können auch die Anhydride der genannten Dicarbonsäuren eingesetzt werden, sofern sie existieren.

Die besonders gute Eignung der erfindungsgemäßen Polyesterpolyole ist auf die erfindungsgemäße Auswahl der den Polyesterpolyolen zugrundeliegenden Ausgangsmaterialien und deren Mengenverhältnis zurückzuführen. Die erfindungsgemäßen Polyesterpolyole weisen Hydroxylzahlen von 75, bevorzugt 80 bis 300, Säurezahlen von 5 bis 30 und stöchiometrisch errechnete Molmassen von 600 bis 15000 auf. Die erfindungsgemäßen Polyesterpolyole sind im allgemeinen feste, farblose bis hellgelb gefärbte, klare Harze, die in inerten Lacklösungsmitteln wie beispielsweise Kohlenwasserstoffen, wie Toluol, Xylol, Solvent Naphta, oder höheren Alkylbenzolen, Estern wie Ethylacetat, Butylacetat, Ethoxypropylacetat, Ethoxyethylpropionat, Ketonen wie Methylethylketon oder Methylisobutylketon oder deren Gemischen, löslich sind.

Die Herstellung der erfindungsgemäßen Polyesterpolyole erfolgt in an sich bekannter Weise nach Methoden, wie sie beispielsweise in "Ullmanns Enzyklopädie der technischen Chemie, Verlag Chemie Weinheim, 4. Auflage (1980), Band 19, Seiten 61 ff. oder von H. Wagner und H.F Sarx in "Lackkunstharze", Carl Hanser Verlag, München (1971), Seiten 86-152 ausführlich beschrieben sind. Die Veresterung erfolgt in Gegenwart eines Inertgases, z.B. Stickstoff, gegebenenfalls in Gegenwart einer katalytischen Menge eines üblichen Veresterungskatalysators wie z.B. Säuren, Basen oder Übergangsmetallverbindungen wie z.B. Titantetrabutylat, bei ca. 150-260°C. Die Veresterungsreaktion wird so lange durchgeführt, bis die angestrebten Werte für die Hydroxyl- und Säurezahl erreicht sind. Das Molekulargewicht der erfindungsgemäßen Polyesterpolyole kann aus der Stöchiometrie der Ausgangsmaterialien (unter Berücksichtigung der resultierenden Hydroxyl- und Säurezahlen) berechnet werden.

Bei der erfindungsgemäßen Verwendung der erfindungsgemäßen Polyesterpolyole werden diese gegebenenfalls in Abmischung mit anderen, aus der Polyurethanlacktechnologie bekannten organischen Polyhydroxylverbindungen als Polyhydroxyl- Komponente eingesetzt. Bei diesen anderen Polyhydroxylverbindungen kann es sich um die üblichen Polyester-, Polyether- oder Polyacrylat-Polyole handeln.

Vorzugsweise werden als weitere organische Polyhydroxylverbindungen, falls solcbe überhaupt neben den erfindungswesentlichen Polyesterpolyolen zum Einsatz gelangen, die an sich bekannten Polyacrylatpolyole des Standes der Technik eingesetzt.

Als Abmischkomponente geeignete Polyacrylatpolyole sind z.B. in Lacklösungsmitteln der bereits beispielhaft genanten Art lösliche Copolymerisate, wie diese nach DE-OS 40 01 580, DE-OS 41 24 167 oder DE-OS 28 58 096 erhältlich sind. Der Hydroxylgruppengehalt dieser Polyacrylatpolyole liegt im allgemeinen zwischen 2 und 5 Gew.-%. Bei der erfindungsgemäßen Verwendung der erfindungsgemäßen Polyesterpolyole können diese in Abmischung mit bis zu 90, vorzugsweise bis zu 50 Hydroxyläquivalent-%, bezogen auf alle Polyhydroxylverbindungen, an anderen Polyolen der beispielhaft genannten Art zum Einsatz gelangen. Besonders bevorzugt werden jedoch die erfindungsgemäßen Polyesterpolyole als alleinige Polyol-Komponente bei der erfindungsgemäßen Verwendung eingesetzt.

Die zur Vernetzung der erfindungsgemäßen Polyesterpolyole verwendbaren Polyisocyanate sind lacktypische Polyisocyanate.
Der Anteil an Polyisocyanat-Vernetzer wird so gewählt, daß auf eine Hydroxylgruppe der Bindemittelmischung 0,5 bis 1,5 Isocyanat-Gruppen entfallen. Überschüssige Isocyanat-Gruppen können durch Feuchtigkeit abreagieren und zur Vernetzung beitragen. Es können aliphatische, cycloaliphatische und aromatische Polyisocyanate verwendet werden wie Hexamethylendiisocyanat, Trimethylhexamethylendiisocyanat, Isophorondiisocyanat, 4,4'Diisocyanatodicyclohexylmethan, Toluylen-2,4-diisocyanat,o-,m- und p-Xylylendiisocyanat, 4,4'- Diisocyanatodiphenylmethan; verkappte Polyisocyanate wie mit CH-, NH- oder OH-aciden Verbindungen; verkappte Polyisocyanate sowie z.B. Biuret-, Allophanat-, Urethan- oder Isocyanurat- Gruppen enthaltende Polyisocyanate. Beispiele für derartige Polyisocyanate sind ein Biuretgruppen enthaltendes Umsetzungsprodukt aus 3 Molen Hexamethylendiisocyanat mit 1 Mol Wasser mit einem NCO-Gehalt von ca. 22% (entsprechend dem Handelsprodukt Desmodur N BAYER AG,eingetragenes Warenzeichen) ein Isocyanatgruppen enthaltendes Polyisocyanat, das durch Trimerisierung von 3 Molen Hexamethylendiisocyanat hergestellt wird mit einem NCO-Gehalt von etwa 21,5% (entsprechend dem Handelsprodukt Desmodur N 3390 BAYER AG, eingetragenes Warenzeichen) oder Urethangruppen enthaltende Polyisocyanate, welche Reaktionsprodukte darstellen aus 3 Molen Toluylendiisocyanat und 1 Mol Trimethylolpropan mit einem NCO- Gehalt von etwa 17,5% (entsprechend dem Handelsprodukt Desmodur L BAYER AG, eingetragenes Warenzeichen.)
Bevorzugt eingesetzt werden Desmodur N und Desmodur N3390 BAYER AG, eingetragenes Warenzeichen.

In den bei der erfindungsgemäßen Verwendung zum Einsatz gelangenden Zweikomponenten-Polyurethanlacken liegen die Polyolkomponente und die Polyisocyanatkomponente in einem Äquivalentverhältnis von Isocyanatgruppen zu Hydroxylgruppen von 2:1 bis 1:2, vorzugsweise 1,5:1 bis 1:1,5, entsprechenden Mengen vor. Die durch Vermischen der beiden Komponenten erhaltenen Zweikomponenten-Bindemittel haben nur eine begrenzte Verarbeitungszeit von ca. 2 bis 48 Stunden und werden unter Mitverwendung der üblichen Hilfs- und Zusatzmittel verarbeitet. Diese gegebenenfalls mitzuverwendenden Hilfs- und Zusatzmittel können entweder dem Gemisch oder den Einzelkomponenten vor deren Durchmischung hinzugefügt werden.

Als Hilfs - und Zusatzmittel kommen beispielsweise inerte Lösungsmittel in Betracht wie z.B. Ethylacetat, Butylacetat, Methylethylketon, Methylisobutylketon, Ethoxypropylacetat, Methoxypropylacetat, Ethoxyethylpropionat, Methoxybutylacetat, Butylglykolacetat, Toluol, Xylol, Solvent Naphta, Testbenzin oder beliebige Gemische dieser Lösungsmittel.

Die Lösungsmittel werden in einer Menge von bis zu 60, vorzugsweise bis zu 45 Gew.-%, bezogen auf Gesamtgemisch, mitverwendet.

Weitere, gegebenenfalls mitzuverwendende Hilfs- und Zusatzmittel sind z.B. Weichmacher wie z.B. Trikresylphosphat oder Phtalsäurediester, Chlorparaffine, Pigmente und Füllstoffe wie Titanoxid, Bariumsulfat, Kreide, Ruß, Katalysatoren wie z.B. N,N-Dimethylbenzylamin, N-Methylmorpholin, Bleioctoat oder Dibutylzinndilaurat, Verlaufmittel, Verdickungsmittel, gegebenenfalls Stabilisatoren wie substituierte Phenole, organofunktionelle Silane; Haftvermittler und Lichtschutzmittel sind beispielsweise sterisch gehinderte Amine, wie sie u.a. in DE-OS 2 417 353 (=US-PS 4 123 418 und US-PS 4 110 304) und DE-OS 2 456 864 (= US-PS 3 993 655 und US-PS 4 221 701) beschrieben sind. Besonders bevorzugte Verbindungen sind: Bis-(1,2,2,2,6,6-pentamethylpiperidyl4) -sebacat, Bis-(2,2,6,6-tetrametylpiperidyl-4) -sebacat, n-Butyl-(3,5-di tert. -butyl-4-hydroxybenzyl) -malonsäure-bis-(1,2,2,6,6-pentamethylpiperidyl-4) -ester.

Die den Füllstoffen und Pigmenten anhaftende Feuchtigkeit kann durch vorhergehende Trocknung oder durch Mitverwendung von wasseraufnehmenden Stoffen, wie z.B. Molekularsieb-Zelolithen, entfernt werden.
Die Trocknung der bei der erfindungsgemäßen Verwendung resultierenden Lackfilme kann bei Raumtemperatur erfolgen und bedarf keiner Temperaturerhöhung, um die eingangs erwähnten, optimalen Eigenschaften zu erreichen. Die verhältnismäßig schnell verlaufende Trocknung bei Raumtemperatur kann durch eine Temperaturerhöhung auf ca. 60 bis 120°C, vorzugsweise 60 bis 80°C, während eines Zeitraumes von 20 bis 40 Minuten zusätzlich beschleunigt werden. Eine höhere Trocknungstemperatur und somit eine Verkürzung des Einbrennprozesses ist zwar möglich, jedoch bei vielen Substraten wie Kunststoffteilen, Hölzern, Papieren und Pappen nicht ratsam.

Die erfindungsgemäß zum Einsatz gelangenden Reaktionslacke eignen sich vor allem für die Lackierung von Metallen, Hölzern, Papieren, Pappen sowie Kunststoffen, jedoch auch für andere Substrate.Besonders vorteilhaft eignen sich die erfindungsgemäß zum Einsatz gelangenden Reaktionslacke zum Lackieren von Metallen, wie sie beim Automobilbau und in der Industrie Verwendung finden. Wegen der gleichermaßen guten Eignung der erfindungsgemäß zum Einsatz gelangenden Reaktionslacke für Kunststoffe und Metalle eignen sich diese insbesondere auch hervorragend zur Lackierung von Konstruktionen wie z.B. Außenteilen von Automobilen, die in moderner Gemischtbauweise aus Kunststoff- und Metallteilen hergestellt werden. Die besonderen Vorteile der erfindungsgemäß zum Einsatz gelangenden Lacke begünstigen diese "on line"-Lackierung insbesondere von Automobilaußenteilen, da die Härtung der Lackfilme bereits bei niedrigen Temperaturen erfolgen kann, so daß die Kunststoffe keiner übermäßigen Temperaturbelastung ausgesetzt werden, da die resultierenden Lackfilme eine ausgezeichnete Witterungsbeständigkeit aufweisen, so daß dekorative Lackierungen für eine lange Zeitdauer unverändert erhalten bleiben und Beanspruchungen durch Stoß oder Schlag schadlos überstehen. Hervorzuheben ist in diesem Zusammenhang insbesondere auch die ausgezeichnete Steinschlagfestigkeit von erfindungsgemäß hergestellten Automobil- Decklackierungen. Die mit den erfindungsgemäß zum Einsatz gelangten Zweikomponenten- Lacke erhaltenen Lackfilme erfüllen in optimaler Weise zwei an sich gegensätzliche Forderungen, nämlich eine geringe Molmasse und die damit verbundene Einsparung von Lösungsmitteln bei gleichzeitig hoher Glanzhaltung.

Die erfindungsgemäß zum Einsatz gelangenden Reaktionslacke können nach allen üblichen Methoden der Lacktechnologie, wie z.B. Streichen, Spritzen oder Tauchen, auf die zu beschichtenden Substrate aufgetragen werden. Die erfindungsgemäßen Reaktionlacke eignen sich sowohl zur Herstellung von Grundierungen als auch zur Herstellung von Zwischenschichten sowie auch zur Herstellung von Deckschichten auf den zu lackierenden Substraten.

Die Polyesterpolyole der Erfindung liefern im allgemeinen, gelöst in Butylacetat als 70%ige Lösungen, Viskositäten (gemessen nach DIN 53019 bei 23°C) von 500 bis 6000 mPa*s, bevorzugt 700 bis 4000 mPa*s.

Die besten Ausführungsformen der Polyesterpolyole der Erfindung werden durch die nachfolgenden Beispiele 1, 3.2 und 3.3 verdeutlicht.

Die nachfolgenden Beispiele dienen zur weiteren Erläuterung der Erfindung.

### Beispiel 1

| Polyesterpolyol aus | |
|---|---|
| 2,5 Mol Neopentylglykol | 260,5 g |
| 1,5 Mol Trimethylolpropan | 201,3 g |
| 3,0 Mol Hexahydrophthalsäureanhydrid | 462,6 g |

Das vorstehende Gemisch wurde unter Stickstoff auf 190 bis 220°C erhitzt und das gebildete Reaktionswasser wurde laufend entfernt. Die Temperatur wurde im Verlauf von 5 bis 10 Stunden kontinuierlich auf 220°C erhöht bis die Säurezahl auf 15 bis 25 abgesunken war. Nach dem Abkühlen auf 160°C wird,

| | |
|---|---|
| 0,25 Mol Phthalsäureanhydrid | 37,025 g |

zugegeben und unter Stickstoff auf 190 bis 220°C erhitzt und das gebildete Reaktionswasser laufend entfernt. Die Temperatur wurde im Verlauf von 1 bis 5 Stunden kontinuierlich auf 220°C erhöht, bis die Säurezahl auf 10 bis 25 abgesunken war. Nach dem Abkühlen liegt das Reaktionsprodukt in fester Form vor. Durch Zugabe von 380 g Butylacetat wird das Produkt auf ca. 70% nichtflüchtigen Anteil verdünnt.
Durch mehrfache Wiederholung der Umsetzung wurden für die Polyesterpolyole folgende Werte gefunden.

| Versuche | 1 | 2 | 3 | 4 | 5 |
|---|---|---|---|---|---|
| Hydroxylzahl (DIN 53240) mg KOH/g Festharz | 195 | 194 | 193 | 194 | 195 |
| Säurezahl (DIN 53402) mg KOH/g Festharz | 16,1 | 16,3 | 15,5 | 17,7 | 18,9 |
| Viskosität (DIN 53019) in mPa*s bei 23°C/Lieferform | 1190 | 1050 | 1110 | 1070 | 1040 |
| Nichtflüchtiger Anteil (DIN 53216) in %/1 Std. bei 125°C | 70,1 | 70,0 | 70,2 | 70,0 | 70,2 |

Das Polyesterpolyol besteht aus 55,17 Mol-% Polyolen und 44,83 Mol-% Dicarbonsäure.

### Beispiel 2 mit Vergleich

Weißlack auf Basis eines Polyesterpolyols des Beispiels 1 gemäß der älteren deutschen Patentanmeldung 195 370 26/75% in Butylacetat/Shellsol A (1:2) als Vergleich und Polyesterpolyol gemäß Erfindung Beispiel 1, 70 %ig Butylacetat.

| | Polyesterpolyol gemäß Erfindung Beispiel 1,70%ig in Butylacetat | Polyesterpolyol gemäß Patentanmeldung 19 537 026 Beispiel 1 |
|---|---|---|
| | | 75%ig in Butylacetat/Shellsol A 1:2 gelöst |
| Harz | 25,00 | 25,00 |
| Kronos Titandioxid 2160 | 29,00 | 29,00 |
| Bentone 38 10%ig in Xylol + 4% Anti Terra U | 1,50 | 1,50 |
| Byk 160 30%ig | 3,75 | 3,75 |
| Butylacetat | 6,00 | 10,60 |
| Shellsol A | 1,80 | 1,80 |
| 30 min. Perlmühle 1:1 mit Perlen | | |
| Harz | 18,90 | 16,00 |
| Byk 344 10%ig in X. | 2,00 | 2,00 |
| Byketol OK | 3,00 | 3,00 |
| Butylacetat | 9,05 | 10,35 |
| Gesamtgewicht | 100,00 | 103,00 |
| Desmodur N 3390 | 23 | 18 |
| nfA bei 21 sek., DIN 53216, 1g Einwaage, DIN 53216 | 70,3% | 66% |
| Dichte g/ml | 1,24 | 1,24 |
| VOC-Anteil (g Lösungsmittel/l Lack) | 368,28 | 421,6 |
| Topfzeit in sek. sofort | 21 | 22 |
| nach 2 Stunden | 24 | 27 |
| nach 4 Stunden | 27 | 35 |
| nach 6 Stunden | 35 | 47 |
| nach 8 Stunden | 43 | 78 |
| Pendelhärte auf Glas, 40 µm Trockenfilm, 150µm Naßfilm, in sek. | | |
| 30 min. bei 60°C + 1 Std. | 13 | 13 |
| 30 min. bei 60°C + 1 d | 136 | 68 |
| 30 min. bei 80°C + 1 Std. | 138 | 103 |
| 30 min. bei 80°C + 1 d | 175 | 110 |
| Lufttrocknung nach 1 d | 75 | 23 |
| nach 4 d | 173 | 55 |
| noch 5 d | 183 | 58 |
| nach 18 d | 183 | 118 |
| Stahlplatten mit konventionellen Füller Weißlack, 60 min. 80°C + 19d | | |
| Schichtstärke Füller in µm | 33 - 35 | 35 - 36 |
| Schichtstärke Decklack In µm | 55 - 58 | 50 - 60 |
| Pendelhärte in sek: | 173 | 149 |
| Erichsen-Tiefung in mm | 6,8 | 4,8 |
| Glanz 60° Winkel in % | 93,8 | 93,3 |
| Haftung Gt | 0 | 0 |
| 5 min. Xylolbeständigkeit | i.o. | i.o. |
| 5 min. Superbenzinbeständigkeit | i.o. | i.o. |
| QUV-Test,(313Nm) auf phosphatierte Alu-Platten 60 min. 80°C + 3 | | |
| Std. | | |
| 0-Wert 20° | 87% | 85% |
| nach 500 Std. | 83% | 85% |
| nach 1000 Std. | 80% | 82% |
| nach 1500 Std. | 73% | 75% |
| 0-Wert 60° Winkel | 94% | 93% |
| 500 Std. | 93% | 93% |
| 1000 Std. | 92% | 92% |
| 1500 Std. | 90% | 91% |

Aus den vorstehenden Tabellenwerten für Beispiel 2 mit Vergleich ergibt sich, daß die Weißlacke auf der Basis eines Polyesterpolyols der Erfindung gemäß Beispiel 1 in Verbindung mit Desmodur N 339Q als Härter und Vernetzer nach Beispiel 2 in überraschender Weise in verschiedenen Richtungen hervorragende Eigenschaften besitzen.

So beträgt der gemessene, nichtflüchtige Anteil (nach DIN 53216) bei der Verarbeitungsviskosität bei 21 sek. 70,3 Gew.-%. Der Vergleichslack gemäß der älteren, aber noch nicht veröffentlichten deutschen Patentanmeldung 19 537 026, die Polyesterpolyole mit vorzüglichen Eigenschaften beinhaltet, besitzt bereits sehr beachtliche, aber deutlich weniger als 66 Gew.-% nichtflüchtige Anteile.

Noch deutlicher wird der Unterschied der Vergleichswerte bei der Betrachtung des VOC (volatile organic compounds, zu deutsch flüchtige organische Verbindungen)-Anteils (g Lösungsmittel/l Lack), der gemäß Erfindung 368,28 g und beim Vergleich 421,6 g beträgt, das heißt: der erfindungsgemäße Lack benötigt pro Liter Lack 53,32 g weniger Lösungsmittel. Damit erfüllt der erfindungsgemäße Lack problemlos bereits heute die ab 1998 von der CEPE vorgeschlagenen VOC-Regelungen und ist mit im Markt befindlichen "High-Solid"-Lacken mit 40 bis 60 g weniger Lösungsmittel im Vorteil bei deutlich schnellerer Trocknung.

Die bestimmten Topfzeiten für die Reaktionslacke zeigen ebenfalls für die Erfindung vorteilhaftere Werte, die für die Verarbeitungspraxis, besonders bei großen Objekten, von Bedeutung sind.

Eine vergleichende Betrachtung der Pendelhärte (Oberflächenhärte) zeigt überraschend verbesserte Werte für den erfindungsgemäßen Lack.

Weitere Erprobungen haben ergeben, daß die Polyesterpolyole der Erfindung vielseitig im Möbel-, Industrie-, KFZ (auch Luft-, Schienen- und Straßenverkehr)-Bereich für Klar- und pigmentierte Decklacke, Grundierungen und Füller verwendbar sind.

Hervorzuheben ist die hervorragende Wetterbeständigkeit der erfindungsgemäß hergestellten Beschichtungen, die kein am Markt befindliches Produkt in Bezug auf Glanzhaltung und Vergilbungsbeständigkeit (Farbtonhaltung) bieten kann. Insbesonders im Vergleich zu den qualitativ wesentlich höher einzuschätzenden Acrylatharzen bietet die Erfindung überraschend deutliche Vorteile.

Mit den Überzügen gemäß der Erfindung werden schnell trocknende Filme bei üblichen 40 µm Trockenfilmschichtstärke erreicht.

Da die Polyesterpolyole durch Schmelzkondensation erhalten werden, sind diese frei von Lösungsmitteln, so daß diese Wahlweise mit jedem organischen Lösungsmittel, angepaßt an den Gebrauchszweck, verdünnt werden können.

Beispiele 3.1 bis 3.10 verdeutlichen die Herstellung gebrauchsfähiger Polyesterpolyole mit unterschiedlichen Molmassen, Hydroxylzahlen und Viskositäten. Die Herstellungsmethoden entsprechen dem Beispiel 1.

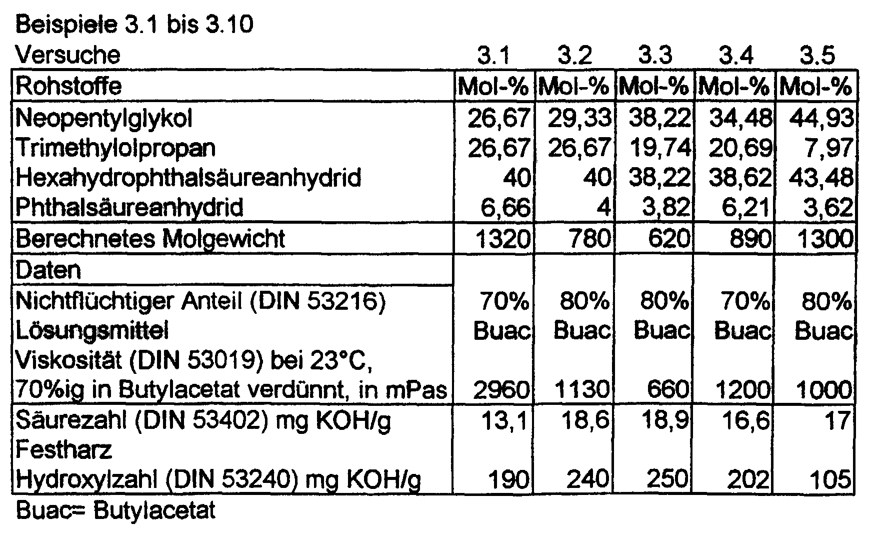

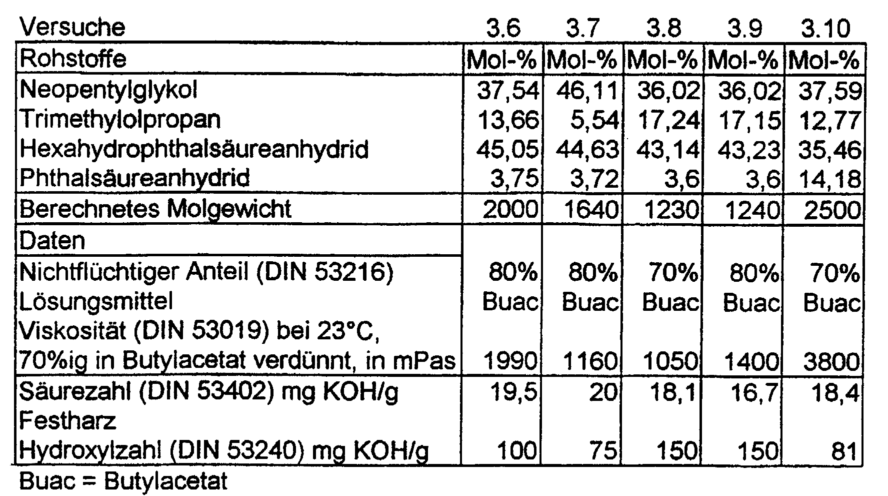

### Beispiele 4.1 bis 4.3.

Weißlacke auf Basis der Polyesterpolyole gemäß den Beispielen 3.2 - 3.4.

| | | | |
|---|---|---|---|
| Lackbeispiele | 4.1 | 4.2 | 4.3 |
| Polyesterpolyole | 3.4 | 3.2 | 3.3 |
| Harz | 25,00 | 25,00 | 25,00 |
| Kronos Titandioxid 2160 | 29,00 | 29,00 | 29,00 |
| Bentone 38 10%ig in Xylol + 4% Anti Terra U | 1,50 | 1,50 | 1,50 |
| Byk 160 30%ig | 3,75 | 3,75 | 3,75 |
| Butylacetat | 6,00 | 10,00 | 10,00 |
| Shellsol A | 1,80 | 1,80 | 1,80 |
| **30 min. Perlmühle 1:1 mit Perlen** | | | |
| Harz | 18,90 | 13,40 | 13,40 |
| Byk 344 10%ig in X. | 2,00 | 2,00 | 2,00 |
| Byketol OK | 3,00 | 3,00 | 3,00 |
| Butylacetat | 9,05 | 10,55 | 10,55 |
| Gesamtgewicht | 100,00 | 100,00 | 100,00 |
| Desmodur N 3390 | 23 | 29 | 29 |
| Verdünnerlösung | 0,8 | | |
| nfA, DIN 53216, 1g Einwaage | 69,5% | 70,8% | 70,2% |
| Dichte g/ml | 1,24 | 1,24 | 1,24 |
| VOC-Anteil bei gemessenen nfA (g Lösungsmittel/l | 378,20 | 362,08 | 369,52 |
| Lack) | | | |
| Topfzeit in sek. sofort | 22 | 21 | 18,5 |
| nach 2 Stunden | 26 | 24 | 21 |
| nach 4 Stunden | 32 | 28 | 24 |
| nach 6 Stunden | 42 | 34 | 29 |
| nach 8 Stunden | 48 | 48 | 41 |
| **Pendelhärte auf Glas, 40 µm Trockenfilm, in sek.** | | | |
| 30 min. bei 60°C + 1 Std. | 24 | 7 | 7 |
| 30 min. bei 60°C + 1 d | 163 | 152 | 156 |
| 30 min. bei 80°C + 1 Std. | 168 | 134 | 137 |
| 30 min. bei 80°C + 1 d | 210 | 203 | 190 |
| Lufttrocknung nach 1 d | 63 | 83 | 80 |
| nach 2 d | 146 | 190 | 173 |
| nach 3 d | 163 | 196 | 185 |
| nach 4 d | 173 | 218 | 202 |
| nach.7 d | 178 | 220 | 220 |
| **Stahlplatten mit Handelsüblichen Füller, 60 min.** | | | |
| 80°C + 1 d | | | |
| Schichtstärke Füller in µm | 48 - 55 | 42 - 53 | 45 - 52 |
| Schichtstärke Decklack in µm | 51 - 52 | 68 - 75 | 58 - 68 |
| Pendelhärte in sek. | 173 | 152 | 156 |
| Erichsen-Tiefung in mm | 5,8 | 9,2 | 9,3 |
| Glanz 60° Winkel in % | 94 | 93 | 93 |
| Haftung Gt | 0 | 0 | 0 |
| 5 min. Xylolbeständigkeit | fast i.o. | i.o. | i.o. |
| 5 min. Superbenzinbeständigkeit | i.o. | i.o. | i.o. |
| **QUV-Test (313 Nm) auf phosphatierte Alu-Platten** | 60° / 20° | 60° / 20° | 60° / 20° |
| **60 min. 80°C + 3 Std.** | | | |
| 0-Wert | 94% / 87% | 93% / 86% | 93% / 86% |
| nach 500 Std. | 94% / 85% | 91% / 75% | 89% / 66% |
| nach 1000 Std. | 93% / 81% | 75% / 38% | 66% / 22% |
| Verdünnerlösung= Ethoxypropylacetat 25; Butyacetat 25, Shellsol A 20, Xylol 25, Butoxyl 5 (Zahlen bedeuten Gew.-%) | | | |

Aus den vorstehenden Tabellenwerten ergibt sich, daß die Weißlacke auf der Basis der Polyesterpolyole 3.2, 3.3 und 3.4 der Erfindung in Verbindung mit Desmodur N 3390 als Härter und Vernetzer in überraschender Weise in verschiedenen Richtungen ebenfalls hervorragende Eigenschaften besitzen.

So beträgt der gemessene, nichtflüchtige Anteil (nach DIN 53216) bei der Verarbeitungsviskosität bei 18,5 bis 22 sek. 69,5 - 70,8 Gew.-%. Für den Gebrauchszweck handelsübliche gute Produkte haben nur 45 - 60 Gew.-% nichtflüchtige Anteile.

Noch deutlicher wird der Unterschied zu handelsüblichen Produkten bei der Betrachtung des VOC, die gemäß Erfindung in den Beispielen 4.1 - 4.3 362 - 378 g beträgt. Bei handelsüblichen Produkten beträgt der VOC-Wert 500 - 700 g, das heißt: der erfindungsgemäße verwendetet Lack benötigt pro Liter Lack mindestems 120 g weniger Lösungsmittel und erfüllt damit problemlos bereits heute die ab 1998 von der CEPE vorgeschlagenen VOC-Regelungen und ist mit im Markt befindlichen guten "High-Solid"-Lacken um 40 bis 120 g weniger Lösungsmittel erheblich im Vorteil bei deutlich schnellerer Trocknung.

Die bestimmten Topfzeiten zeigen ebenfalls für die verwendeten Reaktionslacke vorteilhafte Werte, die für die Verarbeitungspraxis besonders bei großen Objekten von Bedeutung sind.

Eine Betrachtung der Pendelhärte (Oberflächenhärte) zeigt überraschend verbesserte Werte gegenüber handelsüblichen guten "High-Solid-Harzen" für die erfindungsgemäß verwendeten Lacke.

Der Weißlack gemäß Beispiel 4.1 auf Basis des Polyesterpolyols 3.4 bietet im Vergleich zu guten handelsüblichen Produkten überraschend gute Glanzbeständigkeiten, die sogar den bisher höherwertiger eingeschätzten Acrylatharzen überlegen ist.

### Beispiele 5.1 bis 5.3

Weißlacke auf Basis der Polyesterpolyole gemäß den Beispielen 3.5, 3.6 und 3.10.

| | | | |
|---|---|---|---|
| Lackbeispiele | 5.1 | 5.2 | 5.3 |
| Polyesterpolyole | 3.10 | 3.6 | 3.5 |
| Harz | 30,00 | 30,00 | 30,00 |
| Kronos Titandioxid 2160 | 31,50 | 31,50 | 31,50 |
| Bentone 38 10%ig in Xylol + 4% Bykumen | 2,00 | 2,00 | 2,00 |
| Siliconöl LO 50 1%ig Xylol | 0,50 | 0,50 | 0,50 |
| Calcium (4%) naphtenat | 0,50 | 0,50 | 0,50 |
| Xylol | 0,00 | 6,00 | 6,00 |
| Shellsol A | 12,30 | 7,00 | 7,00 |
| **30 min. Perlmühle 1:1 mit Perlen** | | | |
| Harz | 19,70 | 13,50 | 13,50 |
| Byk 300 10%ig in X. | 2,00 | 2,00 | 2,00 |
| Butylacetat | 1,50 | 7,00 | 7,00 |
| Gesamtgewicht | 100,00 | 100,00 | 100,00 |
| Desmodur N 3390 | 11 | 13 | 13 |
| Verdünnerlösung | 18,5 | 9,5 | 4,5 |
| nfA, DIN 53216, 1g Einwaage | 60,8% | 65,7% | 68,0% |
| Dichte g/ml | 1,23 | 1,24 | 1,24 |
| VOC-Anteil bei gemessenen nfA (g Lösungsmittel/l Lack) | 482,16 | 425,32 | 396,80 |
| Topfzeit in sek. sofort | 25 | 25 | 25 |
| nach 2 Stunden | 29 | 38 | 38 |
| nach 4 Stunden | 37 | 47 | 48 |
| nach 6 Stunden | 50 | 70 | 68 |
| nach 8 Stunden | 55 | 108 | 85 |
| **Pendelhärte auf Glas, 40 µm Trockenfilm, in sek.** | | | |
| 30 min. bei 60°C + 1 Std. | 18 | 23 | 21 |
| 30 min. bei 60°C + 1 d | 92 | 82 | 85 |
| 30 min. bei 80°C + 1 Std. | 152 | 140 | 134 |
| 30 min. bei 80°C + 1 d | 172 | 165 | 154 |
| Lufttrocknung nach 1 d | 20 | 22 | 18 |
| nach 2 d | 31 | 34 | 25 |
| nach 5 d | 35 | 35 | 25 |
| nach 6 d | 40 | 38 | 27 |
| nach 12 d | 44 | 44 | 31 |
| **Stahlplatten mit einschichtig mit Lack, 60 min.** | | | |
| **80°C+1 d** | | | |
| Schichtstärke Decklack in µm | 70 - 75 | 80 - 87 | 70 - 76 |
| Pendelhärte in sek. | 101 | 70 | 92 |
| Erichsen-Tiefung in mm | 9,8 | 10,6 | > 11 |
| Glanz 60° Winkel in % | 92 | 92 | 91 |
| Haftung Gt | 0 | 0 | 0 |
| 5 min. Dieselbeständigkeit | i.o. | i.o. | i.o. |
| 5 min. Superbenzinbeständigkeit | nicht i.o. | nicht i.o. | nicht i.o. |
| **QUV-Test (313 Nm) auf phosphatierte Alu-** | 60° /20° | 60° /20° | 60° /20° |
| **Platten 60 min. 80°C + 1 d.** | | | |
| 0-Wert | 92% /85% | 92% /85% | 91% /80% |
| nach 500 Std. | 82% /55% | 77% /43% | 43% / 8% |

Aus den vorstehenden Tabellenwerten ergibt sich, daß die Weißlacke gemäß den Beispielen 5.1 bis 5.3 auf der Basis der Polyesterpolyole 3.5, 3.6 und 3.10 der Erfindung in Verbindung mit Desmodur N 3390 als Härter und Vernetzer in überraschender Weise in verschiedenen Richtungen ebenfalls hervorragende Eigenschaften besitzen.

So beträgt der gemessene, nichtflüchtige Anteil (nach DIN 53216) bei der Verarbeitungsviskosität bei 25 sek. 60,8 - 68 Gew.-%. Für den Gebrauchszweck haben gute handelsübliche Produkte 40 - 54 Gew.-% nichtflüchtige Anteile.

Bei der Betrachtung des VOC (g Lösungsmittel/l Lack), der gemäß Erfindung in den Beispielen 5.1 - 5.3 erheblich herabgesetzt 397 - 482 g beträgt, wird ein sprunghafter Fortschritt in der Lack- und Umwelttechnologie erzielt. Bei handelsüblichen guten Produkten beträgt der VOC-Wert 575 - 750 g, das bedeutet: der erfindungsgemäße Lack benötigt pro Liter Lack mindestems 90 g weniger Lösungsmittel. Damit erfüllen die erfindungsgemäß verwendeten Lacke nach den Beispielen 5.2 und 5.3 bereits heute die ab 1998 von der CEPE vorgeschlagenen VOC-Regelungen.

Die bestimmten Topfzeiten zeigen ebenfalls für die verwendeten Reaktionslacke ebenfalls vorteilhafte Werte, die für die yerarbeitungspraxis besonders bei großen Objekten von Bedeutung sind.

Der Weißlack auf Basis des Polyesterpolyols 3.10 bietet im Vergleich zu guten handelsüblichen Produkten überraschend gute Glanzbeständigkeiten.

### Beispiele 6.1 bis 6.3

Klarlacke aufBasis der Polyesterpolyole gemäß Beispielen 3.9, 1 und 3.8.

| | | | |
|---|---|---|---|
| Klarlackbeispiel | 6.1 | 6.2 | 6.3 |
| | 3.9 | 1 | 3.8 |
| Harz | 61,25 | 61,25 | 61,25 |
| Ethoxypropylacetat | 8,00 | 8,00 | 8,00 |
| DBTL 1% in Xylol | 0,50 | 0,50 | 0,50 |
| Shellsol A | 10,00 | 10,00 | 10,00 |
| Butylacetat | 8,75 | 8,75 | 8,75 |
| Byk 300 10%ig in X. | 2,00 | 2,00 | 2,00 |
| Xylol | 7,00 | 7,00 | 7,00 |
| Tinuvin 1130 | 1,50 | 1,50 | 1,50 |
| Tinuvin 292 | 1,00 | 1,00 | 1,00 |
| Gesamtgewicht | 100,00 | 100,00 | 100,00 |
| Desmodur N 3390 | 28 | 37 | 28 |
| Verdünnerlösung | 11 | 12 | 9 |
| nfA bei 21 sek., DIN 53216, 1g Einwaage | 58,2% | 61,3% | 58,4% |
| Dichte g/ml | 1,00 | 1,00 | 1,00 |
| VOC-Anteil (g Lösungsmittel/l Lack) | 418,00 | 387,00 | 416,00 |
| Topfzeit in sek. sofort | 21 | 21 | 21 |
| nach 2 Stunden | 24 | 27 | 25 |
| nach 4 Stunden | 30 | 34 | 30 |
| nach 6 Stunden | 38 | 45 | 40 |
| nach 8 Stunden | 52 | 65 | 53 |
| **Pendelhärte auf Glas, 200µm Naßfilm, in sek.** | | | |
| 30 min. bei 60°C + 1 Std. | 8 | 11 | 13 |
| 30 min. bei 60°C + 1 d | 82 | 102 | 100 |
| 30 min. bei 80°C + 1 Std. | 110 | 135 | 155 |
| 30 min. bei 80°C + 1 d | 175 | 178 | 193 |
| Lufttrocknung nach 1 d | 14 | 20 | 17 |
| nach 4 d | 49 | 98 | 65 |
| nach 5 d | 54 | 100 | 66 |
| nach 6 d | 59 | 100 | 68 |
| nach 7 d | 62 | 103 | 73 |
| nach 11 d | 66 | 103 | 68 |
| QUV-Test (313 Nm) auf phosphatierte Alu-Platten und Handelsüblichen Decklack + Klarlack 60 min. 80°C + 1d | 60° / 20° | 60° / 20° | 60° / 20° |
| 0-Wert | 92% / 85% | 93% / 87% | 92% / 85% |
| nach 500 Std. | 92% 85% | 91% / 86% | 92% 85% |
| nach 1000 Std. | 92% / 85% | 90% / 85% | 92% / 85% |

Aus den vorstehenden Tabellenwerten ergibt sich, daß die Klarlacke gemäß den Beispielen 6.1 bis 6.3 auf der Basis der Polyesterpolyole 1, 3.8 und 3.9 der Erfindung in Verbindung mit Desmodur N 3390 als Härter und Vernetzer ebenfalls in überraschender Weise in verschiedenen Richtungen hervorragende Eigenschaften besitzen.

So beträgt der gemessene, nichtflüchtige Anteil bei der Verarbeitungsviskosität (4 mm Auslaufbecher DIN 53211) bei 21 sek. 58,2 - 61,3 Gew.-%. Für den gleichen Gebrauchszweck verwendete gute handelsübliche Produkte haben 45 - 54 Gew.-% nichtflüchtige Anteile.

Bei der Betrachtung des VOC (g Lösungsmittel/l Lack), der gemäß Erfindung in den Beispielen 6.1 - 6.3 387 - 418 g beträgt, wird ebenfalls ein erheblicher nicht zu erwartender Fortschritt nachgewiesen. Bei handelsüblichen guten Produkten beträgt der VOC-Wert 460 - 550 g, das heißt: die erfindungsgemäß verwendeten Lacke benötigen pro Liter Lack mindestems 52 g weniger Lösungsmittel. Damit erfüllen die Lacke gemäß den Beispielen 6.1 - 6.3 bereits heute die ab 1998 von der CEPE vorgeschlagenen VOC-Regelungen. Gegenüber am Markt befindlichen guten "High-Solid"-Lacken werden bei den erfindungsgemäß verwendeten Reaktionslacken 40 bis 100 g weniger Lösungsmittel benötigt, wodurch ein erheblicher vorteilhafter Effekt nachgewiesen worden ist.

Die bestimmten Topfzeiten bei den vorstehenden Reaktionslacken zeigen ebenfalls für die Erfindung vorteilhafte Werte, die für die Verarbeitungspraxis besonders bei großen Objekten von Bedeutung sind.

Die Klarlacke gemäß den Beispielen 6.1 bis 6.3 auf Basis der Polyesterpolyole 1, 3.8 und 3.9 bieten überraschend gute Glanzbeständigkeiten.

Die in der Beschreibung und in den Patentansprüchen genannten Hydroxylzahlen und Säurezahlen beziehen sich auf mg KOH/g Festharz.

## Patentansprüche

1. Polyesterpolyole mit Hydroxylzahlen von 75 bis 300, Säurezahlen von 5 bis 30 und stöchiometrisch errechnete Molmassen von 600 bis 15000, aufgebaut aus Umsetzungsprodukten von
a) 5 bis 50 Mol-% Neopentylglykol,
b) 5 bis 45 Mol-% Trimethylolpropan,
c) 20 bis 51,5 Mol-% Hexahydrophtalsäure und/oder deren Anhydrid,
d) 0,5 bis 32 Mol-% Phthalsäure und/oder deren Anhydrid,
e) 0 bis 18 Mol.-% anderen Alkandiolen aus der Gruppe 1,2-, 1,3-, 1,4-Butandiol, 1,5-Pentandiol, 1,6-Hexandiol, Cyclohexan-1,4-dimethanol, Hydroxypivalinsäureneopentyl-ester, Cyclohexandiol, Trimethylpentandiol, Ethylbutylpropandiol, Ethylenglykol, Diethylenglykol, Triethylenglykol, 1,2-Propandiol, Dipropylenglykol, einzeln oder im Gemisch.
f) 0 bis 18 Mol.-% anderen Dicarbonsäuren und/oder Hydroxydicarbonsäuren und/oder deren Anhydrid aus der Gruppe 5-Hydroxyisophthalsäure, Isophthalsäure, Terephthalsäure, Halogensäuren, wie Tetrachlor- bzw. Tetrabromphthalsäure, Tetrahydrophthalsäure, 1,2-Cyclohexandicarbonsäure, 1,4-Cyclohexandicarbonsäure, 4-Methylhexahydrophthalsäure, Endomethylentetrahydrophthalsäure, Tricyclodecan-dicarbonsäure, Endoethylenhexahydrophthalsäure, Camphersäure (1,2,2,-Trimethylcyclopentan-1,3-dicarbonsäure, Adipinsäure, Bernsteinsäure, Azelainsäure, Sebacinsäure, Glutarsäure, einzeln oder im Gemisch.
g) 0 bis 16 Mol.-% Monocarbonsäuren und/oder Hydroxycarbonsäuren aus der Gruppe Benzoesäure, p. tert. Butylbenzoesäure, Laurinsäure, Isononansäure, 2,2-Dimethylpropionsäure, 2-Ethylhexansäure, Capronsäure, Caprylsäure, Caprinsäure, Versaticsäure, Hexahydrobenzoesäure, Hydroxypivalinsäure, 3-,4-,Hydroxybenzoesäure, 2-,3-Hydroxy-4-, 4-methylbenzoesäure, 2-,3-,4-Hydroxybenzoesäure, 2-Hydroxy-2-phenylpropionsäure, einzeln oder im Gemisch.
h) 0 bis 14 Mol.-% aliphatischen und/oder cycloaliphatischen Monoalkoholen, wobei die Monoalkohole 4 bis 18 C-Atome besitzen,
wobei die sich unter a), b), c) und d), gegebenenfalls e), f), g) und h) angegebenen Mol-%-Angaben jeweils zu 100 Mol-% ergänzen.

2. Polyesterpolyole nach Anspruch 1 mit Hydroxylzahlen von 80 bis 300, Säurezahlen von 5 bis 30 und stöchiometrisch errechnete Molmassen von 700 bis 1500.

3. Polyesterpolyole mit Hydroxylzahlen von 100 bis 280, Säurezahlen von 6 bis 28 und stöchiometrisch errechnete Molmassen von 750 bis 12000, aufgebaut aus Umsetzungsprodukten von
a) 8 bis 47 Mol-% Neopentylglykol,
b) 8 bis 42 Mol-% Trimethylolpropan,
c) 25 bis 51 Mol-% Hexahydrophtalsäure und/oder deren Anhydrid,
d) 1 bis 27 Mol-% Phthalsäure und/oder deren Anhydrid,
wobei die sich unter a), b), c) und d) angegebenen Mol-%-Angaben jeweils zu 100 Mol% ergänzen.

4. Polyesterpolyole mit Hydroxylzahlen von 110 bis 270, Säurezahlen von 7 bis 26 und stöchiometrisch errechnete Molmassen von 750 bis 10000, aufgebaut aus Umsetzungsprodukten von
a) 10 bis 45 Mol-% Neopentylglykol,
b) 10 bis 40 Mol-% Trimethylolpropan,
c) 30 bis 50 Mol-% Hexahydrophtalsäure und/oder deren Anhydrid,
d) 1 bis 22 Mol-% Phthalsäure und/oder deren Anhydrid,
wobei die sich unter a), b), c) und d) angegebenen Mol-%-Angaben jeweils zu 100 Mol% ergänzen.

5. Polyesterpolyole mit Hydroxylzahlen von 120 bis 260, Säurezahlen von 8 bis 25 und stöchiometrisch errechnete Molmassen von 780 bis 8000, aufgebaut aus Umsetzungsprodukten von
a) 12 bis 43 Mol-% Neopentylglykol,
b) 12 bis 38 Mol-% Trimethylolpropan,
c) 32 bis 50 Mol-% Hexahydrophtalsäure und/oder deren Anhydrid,
d) 1 bis 17 Mol-% Phthalsäure und/oder deren Anhydrid,
wobei die sich unter a), b), c) und d) angegebenen Mol-%-Angaben jeweils zu 100 Mol% ergänzen.

6. Polyesterpolyole mit Hydroxylzahlen von 125 bis 255, Säurezahlen von 9 bis 24 und stöchiometrisch errechnete Molmassen von 800 bis 7000, aufgebaut aus Umsetzungsprodukten von
a) 14 bis 41 Mol-% Neopentylglykol,
b) 14 bis 36 Mol-% Trimethylolpropan,
c) 35 bis 49 Mol-% Hexahydrophtalsäure und/oder deren Anhydrid,
d) 2 bis 12 Mol-% Phthalsäure und/oder deren Anhydrid,
wobei die sich unter a), b), c) und d) angegebenen Mol-%-Angaben jeweils zu 100 Mol% ergänzen.

7. Polyesterpolyole mit Hydroxylzahlen von 130 bis 250, Säurezahlen von 10 bis 24 und stöchiometrisch errechnete Molmassen von 800 bis 6000, aufgebaut aus Umsetzungsprodukten von
a) 15 bis 40 Mol-% Neopentylglykol,
b) 15 bis 35 Mol-% Trimethylolpropan,
c) 36 bis 48 Mol-% Hexahydrophtalsäure und/oder deren Anhydrid,
d) 2 bis 7 Mol-% Phthalsäure und/oder deren Anhydrid,
wobei die sich unter a), b), c) und d) angegebenen Mol-%-Angaben jeweils zu 100 Mol% ergänzen.

8. Polyesterpolyole mit Hydroxylzahlen von 130 bis 250, Säurezahlen von 10 bis 24 und stöchiometrisch errechneten Molmassen von 600 bis 6000, aufgebaut aus Umsetzungsprodukten von
a) 25 bis 40 Mol-% Neopentylglykol,
b) 18 bis 28 Mol-% Trimethylolpropan,
c) 35 bis 45 Mol-% Hexahydrophtalsäure und/oder deren Anhydrid,
d) 2 bis 5 Mol-% Phthalsäure und/oder deren Anhydrid,
wobei die sich unter a), b), c) und d) angegebenen Mol-%-Angaben jeweils zu 100 Mol% ergänzen.

9. Polyesterpolyole mit Hydroxylzahlen von 75 bis 250, Säurezahlen von 10 bis 24 und stöchiometrisch errechnete Molmassen von 600 bis 2600, aufgebaut aus Umsetzungsprodukten von
a) 25 bis 42 Mol-% Neopentylglykol,
b) 5 bis 28 Mol-% Trimethylolpropan,
c) 35 bis 46 Mol-% Hexahydrophtalsäure und/oder deren Anhydrid,
d) 2 bis 15 Mol-% Phthalsäure und/oder deren Anhydrid,
wobei die sich unter a), b), c) und d) angegebenen Mol-%-Angaben jeweils zu 100 Mol% ergänzen.

10. Polyesterpolyole mit Hydroxylzahlen von 180 bis 250, Säurezahlen von 10 bis 20 und stöchiometrisch errechnete Molmassen von 750 bis 1500, aufgebaut aus Umsetzungsprodukten von
a) 26 bis 30 Mol-% Neopentylglykol,
b) 26 bis 30 Mol-% Trimethylolpropan,
c) 38 bis 41 Mol-% Hexahydrophtalsäure und/oder deren Anhydrid,
d) 3 bis 8 Mol-% Phthalsäure und/oder deren Anhydrid,
wobei die sich unter a), b), c) und d) angegebenen Mol-%-Angaben jeweils zu 100 Mol% ergänzen.

11. Polyesterpolyole mit Hydroxylzahlen von 80 bis 260, Säurezahlen von 8 bis 25 und stöchiometrisch errechnete Molmassen von 600 bis 2600, aufgebaut aus Umsetzungsprodukten von
a) 34 bis 39 Mol-% Neopentylglykol,
b) 12 bis 22 Mol-% Trimethylolpropan,
c) 35 bis 46 Mol-% Hexahydrophtalsäure und/oder deren Anhydrid,
d) 3 bis 15 Mol-% Phthalsäure und/oder deren Anhydrid,
wobei die sich unter a), b), c) und d) angegebenen Mol-%-Angaben jeweils zu 100 Mol% ergänzen.

12. Polyesterpolyole mit Hydroxylzahlen von 75 bis 110, Säurezahlen von 9 bis 24 und stöchiometrisch errechnete Molmassen von 1200 bis 1800, aufgebaut aus Umsetzungsprodukten von
a) 44 bis 47 Mol-% Neopentylglykol,
b) 4 bis 10 Mol-% Trimethylolpropan,
c) 42 bis 45 Mol-% Hexahydrophtalsäure und/oder deren Anhydrid,
d) 2 bis 4 Mol-% Phthalsäure und/oder deren Anhydrid,
wobei die sich unter a), b), c) und d) angegebenen Mol-%-Angaben jeweils zu 100 Mol% ergänzen.

13. Verwendung der Polyesterpolyole gemäß einem der Ansprüche 1 bis 12, gegebenenfalls in Abmischung mit anderen organischen Polyhydroxylverbindungen als Bindemittelkomponenten für Zweikomponenten-Polyurethanlacke, die Lackpolyisocyanate sowie gegebenenfalls die in der Polyurethanlacktechnologie üblichen Hilfs- und Zusatzmittel enthalten, bei der Herstellung von Lacküberzügen auf Metallen, Hözern, Papieren, Pappen sowie Kunststofformteilen.

14. Verwendung der Polyesterpolyole nach einem der Ansprüche 1 bis 12 in Reaktionslacken zur Herstellung von Überzügen oder Grundierungen, wobei die Reaktionslacke durch Mischen von
(A) Polyesterpolyolen,
(B) gegebenenfalls anderen organischen Polyhydroxylverbindungen,
(C) Polyisocyanaten als Härter,
(D) inerten organischen Lösungsmitteln und gegebenenfalls
(E) weiteren in Reaktionslacken üblichen Zusätzen,
erhältlich sind.

15. Verwendung der Polyesterpolyole nach einem der Ansprüche 1 bis 12 zur Herstellung von Überzügen oder Grundierungen durch Auftragen eines Lackes auf Basis von hydroxylgruppentragenden Verbindungen, Polyisocyanaten, inerten Lösungsmitteln sowie gegebenenfalls üblichen Zusätzen auf einen Träger und Aushärten bei Raumtemperatur oder erhöhter Temperatur bis 120°C.

## Claims

1. A polyesterpolyol having hydroxyl numbers of from 75 to 300, acid numbers of from 5 to 30 and stoichiometrically calculated molecular masses of from 600 to 15,000, synthesized from reaction products of
a) from 5 to 50 mol-% of neopentyl glycol,
b) from 5 to 45 mol-% of trimethylolpropane,
c) from 20 to 51.5 mol-% of hexahydrophthalic acid and/or its anhydride,
d) from 0.5 to 32 mol-% of phthalic acid and/or its anhydride,
e) from 0 to 18 mol-% of other alkanediols from the group 1,2-, 1,3-, 1,4-butanediol, 1,5-pentanediol, 1,6-hexanediol, cyclohexane-1,4-dimethanol, neopentyl glycol hydroxypivalate, cyclohexanediol, trimethylpentanediol, ethylbutylpropanediol, ethylene glycol, diethylene glycol, triethylene glycol, 1,2-propanediol, dipropylene glycol, individually or in a mixture,
f) from 0 to 18 mol-% of other dicarboxylic acids and/or hydroxydicarboxylic acids and/or the anhydride thereof, from the group 5-hydroxyisophthalic acid, isophthalic acid, terephthalic acid, halo acids, such as tetrachloro- and tetrabromophthalic acid, tetrahydrophthalic acid, 1,2-cyclohexanedicarboxylic acid, 1,4-cyclohexanedicarboxylic acid, 4-methylhexahydrophthalic acid, endomethylenetetrahydrophthalic acid, tricyclodecanedicarboxylic acid, endoethylenehexahydrophthalic acid, camphoric acid (1,2,2-trimethylcyclopentane-1,3-dicarboxylic acid), adipic acid, succinic acid, azelaic acid, sebacic acid, glutaric acid, individually or in a mixture,
g) from 0 to 16 mol-% of monocarboxylic acids and/or hydroxycarboxylic acids from the group benzoic acid, p-tert-butylbenzoic acid, lauric acid, isononanoic acid, 2,2-dimethylpropionic acid, 2-ethylhexanoic acid, caproic acid, caprylic acid, capric acid, Versatic acid, hexahydrobenzoic acid, hydroxypivalic acid, 3-,4-hydroxybenzoic acid, 2-,3-hydroxy-4-methylbenzoic acid, 2-,3-,4-hydroxybenzoic acid, 2-hydroxy-2-phenylpropionic acid, individually in a mixture,
h) from 0 to 14 mol-% of aliphatic and/or cycloaliphatic monoalcohols, the monoalcohols possessing 4 to 18 C atoms,
the molar percentages stated under a), b), c) and d), and if appropriate e), f), g) and h), in each case adding up to 100 mol-%.

2. A polyesterpolyol as claimed in claim 1, having hydroxyl numbers of from 80 to 300, acid numbers of from 5 to 30 and stoichiometrically calculated molecular masses of from 700 to 1500.

3. A polyesterpolyol having hydroxyl numbers of from 100 to 280, acid numbers of from 6 to 28 and stoichiometrically calculated molecular masses of from 750 to 12,000, synthesized from reaction products of
a) from 8 to 47 mol-% of neopentyl glycol,
b) from 8 to 42 mol-% of trimethylolpropane,
c) from 25 to 51 mol-% of hexahydrophthalic acid and/or its anhydride,
d) from 1 to 27 mol-% of phthalic acid and/or its anhydride,
the molar percentages stated under a), b), c) and d) in each case adding up to 100 mol-%.

4. A polyesterpolyol having hydroxyl numbers of from 110 to 270, acid numbers of from 7 to 26 and stoichiometrically calculated molecular masses of from 750 to 10,000, synthesized from reaction products of
a) from 10 to 45 mol-% of neopentyl glycol,
b) from 10 to 40 mol-% of trimethylolpropane,
c) from 30 to 50 mol-% of hexahydrophthalic acid and/or its anhydride,
d) from 1 to 22 mol-% of phthalic acid and/or its anhydride,
the molar percentages stated under a), b), c) and d) in each case adding up to 100 mol-%.

5. A polyesterpolyol having hydroxyl numbers of from 120 to 260, acid numbers of from 8 to 25 and stoichiometrically calculated molecular masses of from 780 to 8000, synthesized from reaction products of
a) from 12 to 43 mol-% of neopentyl glycol,
b) from 12 to 38 mol-% of trimethylolpropane,
c) from 32 to 50 mol-% of hexahydrophthalic acid and/or its anhydride,
d) from 1 to 17 mol-% of phthalic acid and/or its anhydride,
the molar percentages stated under a), b), c) and d) in each case adding up to 100 mol-%.

6. A polyesterpolyol having hydroxyl numbers of from 125 to 255, acid numbers of from 9 to 24 and stoichiometrically calculated molecular masses of from 800 to 7000, synthesized from reaction products of
a) from 14 to 41 mol-% of neopentyl glycol,
b) from 14 to 36 mol-% of trimethylolpropane,
c) from 35 to 49 mol-% of hexahydrophthalic acid and/or its anhydride,
d) from 2 to 12 mol-% of phthalic acid and/or its anhydride,
the molar percentages stated under a), b), c) and d) in each case adding up to 100 mol-%.

7. A polyesterpolyol having hydroxyl numbers of from 130 to 250, acid numbers of from 10 to 24 and stoichiometrically calculated molecular masses of from 800 to 6000, synthesized from reaction products of
a) from 15 to 40 mol-% of neopentyl glycol,
b) from 15 to 35 mol-% of trimethylolpropane,
c) from 36 to 48 mol-% of hexahydrophthalic acid and/or its anhydride,
d) from 2 to 7 mol-% of phthalic acid and/or its anhydride,
the molar percentages stated under a), b), c) and d) in each case adding up to 100 mol-%.

8. A polyesterpolyol having hydroxyl numbers of from 130 to 250, acid numbers of from 10 to 24 and stoichiometrically calculated molecular masses of from 600 to 6000, synthesized from reaction products of
a) from 25 to 40 mol-% of neopentyl glycol,
b) from 18 to 28 mol-% of trimethylolpropane,
c) from 35 to 45 mol-% of hexahydrophthalic acid and/or its anhydride,
d) from 2 to 5 mol-% of phthalic acid and/or its anhydride,
the molar percentages stated under a), b), c) and d) in each case adding up to 100 mol-%.

9. A polyesterpolyol having hydroxyl numbers of from 75 to 250, acid numbers of from 10 to 24 and stoichiometrically calculated molecular masses of from 600 to 2600, synthesized from reaction products of
a) from 25 to 42 mol-% of neopentyl glycol,
b) from 5 to 28 mol-% of trimethylolpropane,
c) from 35 to 46 mol-% of hexahydrophthalic acid and/or its anhydride,
d) from 2 to 15 mol-% of phthalic acid and/or its anhydride,
the molar percentages stated under a), b), c) and d) in each case adding up to 100 mol-%.

10. A polyesterpolyol having hydroxyl numbers of from 180 to 250, acid numbers of from 10 to 20 and stoichiometrically calculated molecular masses of from 750 to 1500, synthesized from reaction products of
a) from 26 to 30 mol-% of neopentyl glycol,
b) from 26 to 30 mol-% of trimethylolpropane,
c) from 38 to 41 mol-% of hexahydrophthalic acid and/or its anhydride,
d) from 3 to 8 mol-% of phthalic acid and/or its anhydride,
the molar percentages stated under a), b), c) and d) in each case adding up to 100 mol-%.

11. A polyesterpolyol having hydroxyl numbers of from 80 to 260, acid numbers of from 8 to 25 and stoichiometrically calculated molecular masses of from 600 to 2600, synthesized from reaction products of
a) from 34 to 39 mol-% of neopentyl glycol,
b) from 12 to 22 mol-% of trimethylolpropane,
c) from 35 to 46 mol-% of hexahydrophthalic acid and/or its anhydride,
d) from 3 to 15 mol-% of phthalic acid and/or its anhydride,
the molar percentages stated under a), b), c) and d) in each case adding up to 100 mol-%.

12. A polyesterpolyol having hydroxyl numbers of from 70 to 110, acid numbers of from 9 to 24 and stoichiometrically calculated molecular masses of from 1200 to 1800, synthesized from reaction products of
a) from 44 to 47 mol-% of neopentyl glycol,
b) from 4 to 10 mol-% of trimethylolpropane,
c) from 42 to 45 mol-% of hexahydrophthalic acid and/or its anhydride,
d) from 2 to 4 mol-% of phthalic acid and/or its anhydride,
the molar percentages stated under a), b), c) and d) in each case adding up to 100 mol-%.

13. The use of a polyesterpolyol as claimed in one of claims 1 to 12, alone or in a blend with other organic polyhydroxy compounds, as binder components for two-component polyurethane coating materials which comprise paint polyisocyanates and also, if desired, the additives and auxiliaries customary in polyurethane coatings technology, in connection with the preparation of coatings on metals, woods, paper and board and on polymer moldings.

14. The use of a polyesterpolyol as claimed in one of claims 1 to 12 in reactive coating materials for producing coatings or primer coats, the reactive coating materials being obtainable by mixing
(A) polyesterpolyols,
(B) if desired, other organic polyhydroxy compounds,
(C) polyisocyanates as hardeners,
(D) inert organic solvents and, if desired,
(E) further additives customary in reactive coating materials.

15. The use of a polyesterpolyol as claimed in one of claims 1 to 12 for producing coatings or primer coats by applying a coating material based on hydroxyl-bearing compounds, polyisocyanates, inert solvents and, if desired, customary additives to a support and curing the coating material at room temperature or at an elevated temperature up to 120°C.

## Revendications

1. Polyester-polyols ayant un indice d'hydroxyle compris entre 75 et 300, un indice d'acide compris entre 5 et 30 et une masse molaire calculée stoechiométriquement comprise entre 600 et 15 000, constitués de motifs résultant de la réaction
(a) de 5 à 50 % en moles de néopentylglycol,
(b) de 5 à 45 % en moles de triméthylolpropane,
(c) de 20 à 51,5 % en moles d'acide hexahydrophtalique et/ou de l'anhydride de celui-ci,
(d) de 0,5 à 32 % en moles d'acide phtalique et/ou de l'anhydride de celui-ci,
(e) de 0 à 18 % en moles d'autres alcane-diols choisis dans le groupe formé par le 1,2-butanediol, le 1,3-butanediol, le 1,4-butanediol, le 1,5-pentanediol, le 1,6-hexanediol, le cyclohexane- 1,4-diméthanol, l'hydroxypivalate de néopentyle, le cyclohexanediol, le triméthylpentanediol, l'éthylbutylpropanediol, l'éthylèneglycol, le diéthylèneglycol, le triéthylèneglycol, le 1,2-propanediol, le dipropylèneglycol, pris individuellement ou sous forme de mélange,
(f) de 0 à 18 % en moles d'autres acides dicarboxyliques et/ou acides hydroxydicarboxyliques et/ou anhydrides de ceux-ci choisis dans le groupe formé par l'acide 5-hydroxyisophtalique, l'acide isophtalique, l'acide téréphtalique, les acides halogénés tels que l'acide tétrachlorophtalique ou l'acide tétrabromophtalique, l'acide tétrahydrophtalique, l'acide 1,2-cyclohexanedicarboxylique, l'acide 1,4-cyclohexandicarboxylique, l'acide 4-méthylhexahydrophtalique, l'acide endométhylènetétrahydrophtalique, l'acide tricyclodécanedicarboxylique, l'acide endoéthylènehexahydrophtalique, l'acide camphorique (acide 1,2,2-triméthylcyclopentane-1,3-dicarboxylique), l'acide adipique, l'acide succinique, l'acide azélaïque, l'acide sébacique, l'acide glutarique, pris individuellement ou sous forme de mélange,
(g) de 0 à 16 % en moles d'acides monocarboxyliques et/ou hydroxycarboxyliques choisis dans le groupe formé par l'acide benzoïque, l'acide p-*tert*-butylbenzoïque, l'acide laurique, l'acide isononanoïque, l'acide 2,2-diméthylpropionique, l'acide 2-éthylhexanoïque, l'acide caproïque, l'acide caprylique, l'acide caprique, l'acide versatique (Versatic®), l'acide hexahydrobenzoïque, l'acide hydroxypivalique, l'acide 3-hydroxybenzoïque, l'acide 4-hydroxybenzoïque, l'acide 2-hydroxy-4-méthylbenzoïque, l'acide 3-hydroxy-4-méthylbenzoïque, l'acide 2-, 3-, et 4-hydroxybenzoïque, l'acide 2-hydroxy-phénylpropionique, pris individuellement ou sous forme de mélange,
(h) de 0 à 14 % en moles de monoalcools aliphatiques et/ou cycloaliphatiques comportant de 4 à 18 atomes de carbone,
les pourcentages molaires indiqués sous (a), (b), (c) et (d) et éventuellement sous (e), (f), (g) et (h) se complétant à 100 % en moles.

2. Polyester-polyols selon la revendication 1 ayant un indice d'hydroxyle compris entre 80 et 300, un indice d'acide compris entre 5 et 30 et une masse molaire calculée stoechiométriquement comprise entre 700 et 1500.

3. Polyester-polyols ayant un indice d'hydroxyle compris entre 100 et 280, un indice d'acide compris entre 6 et 28, et une masse molaire calculée stoechiométriquement comprise entre 750 et 12 000, constitués de motifs résultant de la réaction
(a) de 8 à 47 % en moles de néopentylglycol,
(b) de 8 à 42 % en moles de triméthylolpropane,
(c) de 25 à 51 % en moles d'acide hexahydrophtalique et/ou de l'anhydride de celui-ci,
(d) de 1 à 27 % en moles d'acide phtalique et/ou de l'anhydride de celui-ci,
les pourcentages molaires indiqués sous (a), (b), (c) et (d) se complétant à 100 % en moles.

4. Polyester-polyols ayant un indice d'hydroxyle compris entre 110 et 270, un indice d'acide compris entre 7 et 26, et une masse molaire calculée stoechiométriquement comprise entre 750 et 10 000, constitués de motifs résultant de la réaction
(a) de 10 à 45 % en moles de néopentylglycol,
(b) de 10 à 40 % en moles de triméthylolpropane,
(c) de 30 à 50 % en moles d'acide hexahydrophtalique et/ou de l'anhydride de celui-ci,
(d) de 1 à 22 % en moles d'acide phtalique et/ou de l'anhydride de celui-ci,
les pourcentages molaires indiqués sous (a), (b), (c) et (d) se complétant à 100 % en moles.

5. Polyester-polyols ayant un indice d'hydroxyle compris entre 120 et 260, un indice d'acide compris entre 8 et 25, et une masse molaire calculée stoechiométriquement comprise entre 780 et 8 000, constitués de motifs résultant de la réaction
(a) de 12 à 43 % en moles de néopentylglycol,
(b) de 12 à 38 % en moles de triméthylolpropane,
(c) de 32 à 50 % en moles d'acide hexahydrophtalique et/ou de l'anhydride de celui-ci,
(d) de 1 à 17 % en moles d'acide phtalique et/ou de l'anhydride de celui-ci,
les pourcentages molaires indiqués sous (a), (b), (c) et (d) se complétant à 100 % en moles.

6. Polyester-polyols ayant un indice d'hydroxyle compris entre 125 et 255, un indice d'acide compris entre 9 et 24, et une masse molaire calculée stoechiométriquement comprise entre 800 et 7 000, constitués de motifs résultant de la réaction
(a) de 14 à 41 % en moles de néopentylglycol,
(b) de 14 à 36 % en moles de triméthylolpropane,
(c) de 35 à 49 % en moles d'acide hexahydrophtalique et/ou de l'anhydride de celui-ci,
(d) de 2 à 12 % en moles d'acide phtalique et/ou de l'anhydride de celui-ci,
les pourcentages molaires indiqués sous (a), (b), (c) et (d) se complétant à 100 % en moles.

7. Polyester-polyols ayant un indice d'hydroxyle compris entre 130 et 250, un indice d'acide compris entre 10 et 24, et une masse molaire calculée stoechiométriquement comprise entre 800 et 6 000, constitués de motifs résultant de la réaction
(a) de 15 à 40 % en moles de néopentylglycol,
(b) de 15 à 35 % en moles de triméthylolpropane,
(c) de 36 à 48 % en moles d'acide hexahydrophtalique et/ou de l'anhydride de celui-ci,
(d) de 2 à 7 % en moles d'acide phtalique et/ou de l'anhydride de celui-ci,
les pourcentages molaires indiqués sous (a), (b), (c) et (d) se complétant à 100 % en moles.

8. Polyester-polyols ayant un indice d'hydroxyle compris entre 130 et 250, un indice d'acide compris entre 10 et 24, et une masse molaire calculée stoechiométriquement comprise entre 600 et 6 000, constitués de motifs résultant de la réaction
(a) de 25 à 40 % en moles de néopentylglycol,
(b) de 18 à 28 % en moles de triméthylolpropane,
(c) de 35 à 45 % en moles d'acide hexahydrophtalique et/ou de l'anhydride de celui-ci,
(d) de 2 à 5 % en moles d'acide phtalique et/ou de l'anhydride de celui-ci,
les pourcentages molaires indiqués sous (a), (b), (c) et (d) se complétant à 100 % en moles.

9. Polyester-polyols ayant un indice d'hydroxyle compris entre 75 et 250, un indice d'acide compris entre 10 et 24, et une masse molaire calculée stoechiométriquement comprise entre 600 et 2600, constitués de motifs résultant de la réaction
(a) de 25 à 42 % en moles de néopentylglycol,
(b) de 5 à 28 % en moles de triméthylolpropane,
(c) de 35 à 46 % en moles d'acide hexahydrophtalique et/ou de l'anhydride de celui-ci,
(d) de 2 à 15 % en moles d'acide phtalique et/ou de l'anhydride de celui-ci,
les pourcentages molaires indiqués sous (a), (b), (c) et (d) se complétant à 100 % en moles.

10. Polyester-polyols ayant un indice d'hydroxyle compris entre 180 et 250, un indice d'acide compris entre 10 et 20, et une masse molaire calculée stoechiométriquement comprise entre 750 et 1500, constitués de motifs résultant de la réaction
(a) de 26 à 30 % en moles de néopentylglycol,
(b) de 26 à 30 % en moles de triméthylolpropane,
(c) de 38 à 41 % en moles d'acide hexahydrophtalique et/ou de l'anhydride de celui-ci,
(d) de 3 à 8 % en moles d'acide phtalique et/ou de l'anhydride de celui-ci,
les pourcentages molaires indiqués sous (a), (b), (c) et (d) se complétant à 100 % en moles.

11. Polyester-polyols ayant un indice d'hydroxyle compris entre 80 et 260, un indice d'acide compris entre 8 et 25, et une masse molaire calculée stoechiométriquement comprise entre 600 et 2600, constitués de motifs résultant de la réaction
(a) de 34 à 39 % en moles de néopentylglycol,
(b) de 12 à 22 % en moles de triméthylolpropane,
(c) de 35 à 46 % en moles d'acide hexahydrophtalique et/ou de l'anhydride de celui-ci,
(d) de 3 à 15 % en moles d'acide phtalique et/ou de l'anhydride de celui-ci,
les pourcentages molaires indiqués sous (a), (b), (c) et (d) se complétant à 100 % en moles.

12. Polyester-polyols ayant un indice d'hydroxyle compris entre 75 et 110, un indice d'acide compris entre 9 et 24, et une masse molaire calculée stoechiométriquement comprise entre 1200 et 1800, constitués de motifs résultant de la réaction
(a) de 44 à 47 % en moles de néopentylglycol,
(b) de 4 à 10 % en moles de triméthylolpropane,
(c) de 42 à 45 % en moles d'acide hexahydrophtalique et/ou de l'anhydride de celui-ci,
(d) de 2 à 4 % en moles d'acide phtalique et/ou de l'anhydride de celui-ci,
les pourcentages molaires indiqués sous (a), (b), (c) et (d) se complétant à 100 % en moles.

13. Utilisation des polyester-polyols selon l'une des revendications 1 à 12 éventuellement sous forme de mélange avec d'autres composés organiques polyhydroxylés en tant que composant liant pour des vernis polyuréthanne bicomposants, contenant des polyisocyanates de vernis, ainsi que, éventuellement, des adjuvants et additifs utilisés habituellement dans l'industrie des vernis de polyuréthanne, pour la fabrication de revêtements en vernis sur des métaux, des matériaux en bois, des papiers, des cartons ainsi que des pièces moulées en matières plastiques.

14. Utilisation des polyester-polyols selon l'une des revendications 1 à 12 dans des vernis réactifs pour la fabrication de revêtements ou d'apprêts, lesdits vernis réactifs étant obtenus par mélange
(A) des polyester-polyols,
(B) éventuellement d'autres composés organiques polyhydroxylés,
(C) de polyisocyanates en tant qu'agent de durcissement,
(D) des solvants organiques inertes et, éventuellement
(E) d'autres additifs utilisés habituellement dans les vernis réactifs.

15. Utilisation des polyester-polyols selon une des revendications 1 à 12 pour la fabrication de revêtements ou d'apprêts par application d'un vernis à base de composés hydroxylés, de polyisocyanates, de solvants inertes ainsi qu'éventuellement d'additifs habituels, sur un support, puis durcissement de celui-ci à température ambiante ou à une température plus élevée pouvant atteindre 120 °C.
